# EUROPÄISCHE PATENTANMELDUNG

(11) **EP 1 275 976 A1**
(43) Veröffentlichungstag der Anmeldung: **15.01.2003**
(21) Anmeldenummer: 02010029.3
(22) Anmeldetag: 06.05.2002
(51) Int. Cl.: G01S 7/40

(54) **Einrichtung zur Funktionsprüfung in einem Dauerstrichradar**

(30) Priorität: 14.07.2001 DE 10134345
(71) Anmelder: EADS Deutschland GmbH, 81663 München (DE)
(72) Erfinder: Solbach, Klaus, Dr., 45473 Mühlheim (DE)
(74) Vertreter: Meel, Thomas

(57) **Zusammenfassung**

Es wird eine Einrichtung zur Funktionsprüfung in Dauerstrichradaren beschrieben, mit einer Senderschaltung (13,4) zur Erzeugung von Radar-Sendesignalen, einer über einen Zirkulator (5) mit der Senderschaltung (13,4) gekoppelten Sende/Empfangsantenne (6) und einer über den Zirkulator (5) mit ihrem Eingang mit der Sende/Empfangsantenne (6) gekoppelten Empfängerschaltung (9, 10) zur Verarbeitung von an der Sende/Empfangsantenne (6) empfangenen Radar-Echosignalen eines des Zielobjekts, wobei der Zirkulator (5) zur Weiterleitung der von der Senderschaltung (13, 4) erzeugten Sendesignale an die Sende/Empfangsantenne (6) und zur Ableitung der von der Sende/Empfangsantenne (6) empfangenen Echosignale des Zielobjekts an den Eingang der Empfängerschaltung (9, 10) dient, und mit einer zwischen Ausgang und Eingang der Empfängerschaltung (9, 10) gekoppelten RPC-Schaltung (1; 1') zur Unterdrückung von aus der Senderschaltung (13,4) und/oder durch Reflexion von der Sende/Empfangsantenne (6) direkt in die Empfängerschaltung (9, 10) abgeleiteten Teilen der Sendesignale, die einen in den Signalweg des Steuersignals geschalteten Modulator (2; 2') zur Erzeugung eines die direkt abgeleiteten Teile der Sendesignale kompensierenden Korrektursignals enthält. Erfindungsgemäß ist es vorgesehen, daß der Modulator (2; 2') zur Erzeugung eines einem zur Funktionsprüfung geeigneten Radar-Echosignal gleichenden Testsignals in Ansprache auf ein von außen zugeführtes Steuersignal vorgesehen ist.

## Beschreibung

Die Erfindung betrifft eine Einrichtung zur Funktionsprüfung in einem Dauerstrichradar nach dem Oberbegriff des Anspruchs 1.

Radare nach dem Dauerstrich-Verfahren, vor allem solche mit Frequenzmodulation (FMCW), werden zur Messung von Entfernungen oder zur Abbildung der Umgebung eingesetzt. Zur Überprüfung der Funktionstüchtigkeit des Radarsystems ist die Einspeisung eines Hochfrequenz-Testsignals möglichst nahe der Radarantenne und Vergleich des Ausgangssignals des Gesamtsystems mit einem vorgegebenen Muster wünschenswert. In grundlegender Form wird dies angenähert bei Höhenmessern (Luftfahrt) durch Einschaltung einer Verzögerungsleitung in die Antennenleitung, so daß ein einzelnes Ziel mit einer bekannten Entfernung, d.h. der Leitungslänge der Verzögerungsleitung, im Höhenmesser-Radarsystem gemessen werden kann. Bei anderen Anwendungen sind solche Verzögerungsleitungen aus Gewichts- und Platzgründen unerwünscht und es wird ein eigenes sinusförmiges Hochfrequenzsignal in der Frequenzerzeugungsbaugruppe erzeugt, das in die Antenne oder in die Hochfrequenzbaugruppe eingespeist wird. In jedem Fall ist ein erheblicher Aufwand nötig, da die entsprechenden Maßnahmen Bauelemente und Baugruppen im Hochfrequenzteil betreffen.

Die Erfindung geht aus von einem Dauerstrichradar, das eine Senderschaltung zur Erzeugung von Radar-Sendesignalen, eine über einen Zirkulator mit der Senderschaltung gekoppelte Sende/ Empfangsantenne und eine über den Zirkulator mit ihrem Eingang mit der Sende/Empfangsantenne gekoppelte Empfängerschaltung zur Verarbeitung von an der Sende/Empfangsantenne empfangenen Radar-Echosignalen eines Zielobjekts enthält. Der Zirkulator dient zur Weiterleitung der von der Senderschaltung erzeugten Sendesignale an die Sende/Empfangsantenne und zur Ableitung der von der Sende/Empfangsantenne empfangenen Echosignale des Zielobjekts an den Eingang der Empfängerschaltung. Eine zwischen Ausgang und Eingang der Empfängerschaltung gekoppelte RPC- Schaltung dient zur Unterdrückung von aus der Senderschaltung und/oder durch Reflexion von der Sende/Empfangsantenne direkt, d.h. nicht als Echosignal, in die Empfängerschaltung abgeleiteten Teilen der Sendesignale, wobei diese einen in den Signalweg des Sendesignals geschalteten Modulator zur Erzeugung eines die direkt abgeleiteten Teile der Sendesignale kompensierenden Korrektursignals enthält. Solche Dauerstrichradare sind aus der DE 199 18 767 A1, aus der EP 0 364 036 A2 oder aus der EP 0 372 641 A2 bekannt.

Die der Unterdrückung des ohne Abstrahlung und Wiederempfang über die Sende-Empfangsantenne direkt in die Empfängerschaltung des Radars abgeleiteten Anteils des Sendesignals dienende RPC-Schaltung (Reflected Power Canceller) wird als solche in den in der DE 199 18 767 A1 hierzu angegebenen Literaturstellen näher beschrieben.

Allgemein stellen die bekannten RPC-Schaltungen eine Regelschleife bereit, in der die auf den Eingang der Empfängerschaltung zulaufenden direkt aus der Senderschaltung abgeleiteten oder durch Reflexion von der Sende/Empfangsantenne reflektierten Teile des Sendesignals mit einem weiteren aus dem Sender abgeleiteten dazu gegenphasigen Signal so überlagert werden, daß eine vollständige Auslöschung erzielt wird. Auf diese Weise wird eine nachteilige Überkopplung von Senderrauschen und Reflexion von der Antenne auf die Empfängerschaltung unterdrückt.

Die Radare können sowohl reine Dauerstrichradare mit Festfrequenz ohne Modulation bzw. Doppler-Radare, als auch frequenzmodulierte (FMCW), gepulste oder unterbrochene (interrupted CW) Dauerstrich-Radare sein.

Die Aufgabe der Erfindung ist es eine Einrichtung zur Funktionsprüfung in einem Dauerstrichradar anzugeben, die auf einfache Weise und ohne großen zusätzlichen schaltungstechnischen Aufwand verwirklicht werden kann. Insbesondere sollen die für die Funktionsprüfung erforderlichen zusätzlichen Bauteile keinen großen Gewichts- oder Platzbedarf nach sich ziehen.

Die genannte Aufgabe wird durch die im Anspruch 1 angegebene Einrichtung zur Funktionsprüfung in einem Dauerstrichradar gelöst.

Vorteilhafte Ausführungsformen der erfindungsgemäßen Einrichtung sind in den Unteransprüchen gekennzeichnet.

Durch die Erfindung wird eine Einrichtung zur Funktionsprüfung in einem Dauerstrichradar geschaffen, das eine Senderschaltung zur Erzeugung von Radar-Sendesignalen, eine über einen Zirkulator mit der Senderschaltung gekoppelte Sende/Empfangsantenne und eine über den Zirkulator mit ihrem Eingang mit der Sende/Empfangsantenne gekoppelte Empfängerschaltung zur Verarbeitung von an der Sende/Empfangsantenne empfangenen Radar-Echosignalen eines Zielobjekts enthält. Der Zirkulator dient zur Weiterleitung der von der Senderschaltung erzeugten Sendesignale an die Sende/Empfangsantenne und zur Ableitung der von der Sende/Empfangsantenne empfangenen Echosignale eines Zielobjekts an den Eingang der Empfängerschaltung. Eine zwischen Ausgang und Eingang der Empfängerschaltung gekoppelte RPC- Schaltung ist zur Unterdrückung von aus der Senderschaltung und/oder durch Reflexion von der Sende/Empfangsantenne direkt in die Empfängerschaltung abgeleiteten Teilen der Sendesignale vorgesehen. Die RPC-Schaltung enthält einen Modulator zur Erzeugung eines die direkt abgeleiteten Teile der Sendesignale kompensierenden Korrektursignals. Erfingungsgemäß ist der Modulator zur Erzeugung eines einem zur Funktionsprüfung geeigneten Radar-Echosignal gleichenden Testsignals in Ansprache auf ein von außen zugeführtes Steuersignal vorgesehen.

Ein wesentlicher Vorteil der erfindungsgemäßen Einrichtung ist es, daß sie den bereits bestehenden Modulator der RPC-Schaltung zur Erzeugung eines Hochfrequenz-Testsignals für die Funktionsprüfung des Dauerstrichradars nutzt. Somit ist nur eine geringe Anzahl von zusätzlichen Bauelementen nötig, um die Einrichtung zur Funktionsprüfung zu realisieren. Ein besonderer Vorteil ist es, daß kein zusätzlicher Aufwand im Bereich der Hochfrequenzbaugruppe nötig ist, sondern lediglich im Bereich der Basisband- Elektronik, der mit geringem Aufwand realisiert werden kann. Dennoch ist durch die erfindungsgemäße Einrichtung die Überprüfung der Funktion des gesamten Hochfrequenzteils, mit Ausnahme der Sende/Empfangsantenne, möglich.

Vorzugsweise ist ein mit dem Modulator der RPC-Schaltung gekoppelter Funktionsgenerator zur Erzeugung des dem Modulator von außen zugeführten Steuersignals vorgesehen.

Der Modulator weist vorzugsweise Steuereingänge zur Aufnahme von Inphase- und Quadratur-Komponenten eines Basisbandsignals der Empfängerschaltung auf, und der Funktionsgenerator ist zur Erzeugung von Inphase- und Quadratur-Komponenten eines Basisband-Testsignals als Steuersignal an den Eingängen des Modulators vorgesehen.

Vorteilhafterweise ist am Eingang des Modulators eine Addiererschaltung zur Kombination des von dem Funktionsgenerator erzeugten Steuersignals mit einem zum Zwecke der Unterdrückung der direkt in die Empfängerschaltung abgeleiteten Sendesignale von der Empfängerschaltung zu dem Modulator zurückgeführten Rückkopplungssignal vorgesehen.

Die Addiererschaltung enthält vorzugsweise jeweils einen mit den Eingängen des Modulators gekoppelten Addierer zur Kombination der Inphase- und Quadratur-Komponenten des von dem Funktionsgenerator als Steuersignal für den Modulator erzeugten Basisband-Testsignals mit den Inphase- und Quadraturkomponenten des Basisband-Signals der Empfängerschaltung.

Gemäß einer vorteilhaften alternativen Ausführungsform der Erfindung ist es vorgesehen, daß der Modulator der RPC-Schaltung zur Kopplung des die direkt abgeleiteten Teile des Sendesignals kompensierenden Korrektursignals und/oder des in Ansprache auf das von außen zugeführte Steuersingal erzeugten Testsignals in dem Signalweg zwischen dem Zirkulator und dem Eingang der Empfängerschaltung vorgesehen ist.

Gemäß einer alternativen vorteilhaften Ausführungsform der Erfindung ist der Modulator der RPC-Schaltung zur Kopplung des die direkt abgeleiteten Teile des Sendesignals kompensierenden Korrektursignals und/oder des in Ansprache auf das von außen zugeführte Steuersignal erzeugten Testsignals in den Signalweg zwischen dem Zirkulator und der Sende/Empfangsantenne vorgesehen und über den Zirkulator mit dem Eingang der Empfängerschaltung gekoppelt.

Gemäß einer vorteilhaften Ausführungsform der Erfindung enthält der Funktionsgenerator einen programmierbaren Signalprozessor und einen an diesen angeschlossenen Digital/Analog-Wandler zur Erzeugung des dem Modulator von außen zugeführten Steuersignals.

Gemäß einer anderen vorteilhaften Ausführungsform enthält der Funktionsgenerator einen Speicher mit einem fest abgelegten Datensatz und einen an diesen angeschlossenen Digital/Analog- Wandler zur Erzeugung des dem Modulator von außen zugeführten Steuersignals.

Gemäß einer Ausführungform der Erfindung ist der Funktionsgenerator zur Erzeugung eines sinusförmigen Steuersignals vorgesehen.

Gemäß einer anderen, besonders vorteilhaften Ausführungsform der Erfindung ist der Funktionsgenerator zur Erzeugung eines oder mehrerer überlagerbarer komplexer Steuersignale vorgesehen.

Im folgenden werden Ausführungsbeispiele der Erfindung anhand der Zeichnung erläutert. Es zeigen:
- Figur 1a): ein Blockschaltbild einer Einrichtung zur Funktionsprüfung in einem Dauerstrichradar gemäß einem ersten Ausführungsbeispiel der Erfindung;
- Figur 1b): ein Blockschaltbild einer Einrichtung zur Funktionsprüfung in einem Dauerstrichradar gemäß einem anderen Ausführungsbeispiel der Erfindung; und
- Figur 2: eine Teildarstellung der erfindungsgemäßen Einrichtung zur Funktionsprüfung in einem Dauerstrichradar, welche die Kopplung eines Funktionsgenerators zur Zuführung eines Testsignals zum Zwecke der Funktionsprüfung wiedergibt.

Die Erfindung geht aus von an sich bekannten Dauerstrich- Radarschaltungen, bei denen eine RPC-Schaltung (RPC = Reflected Power Canceller) vorgesehen ist, um Anteile des Sendesignals zu unterdrücken, die von der Senderschaltung direkt oder nach Reflexion an der Sende/Empfangsantenne in die Empfängerschaltung des Radars abgeleitet werden.

Die bekannten RPC-Schaltungen stellen eine Regelschleife bereit, in der das auf den Eingang der Empfängerschaltung zulaufende, entweder von der Senderschaltung direkt abgeleitete oder von der Antenne reflektierte Signal, mit einem weiteren aus dem Sendesignal abgeleiteten Korrektursignal so überlagert wird, daß eine vollständige Auslöschung erfolgt.

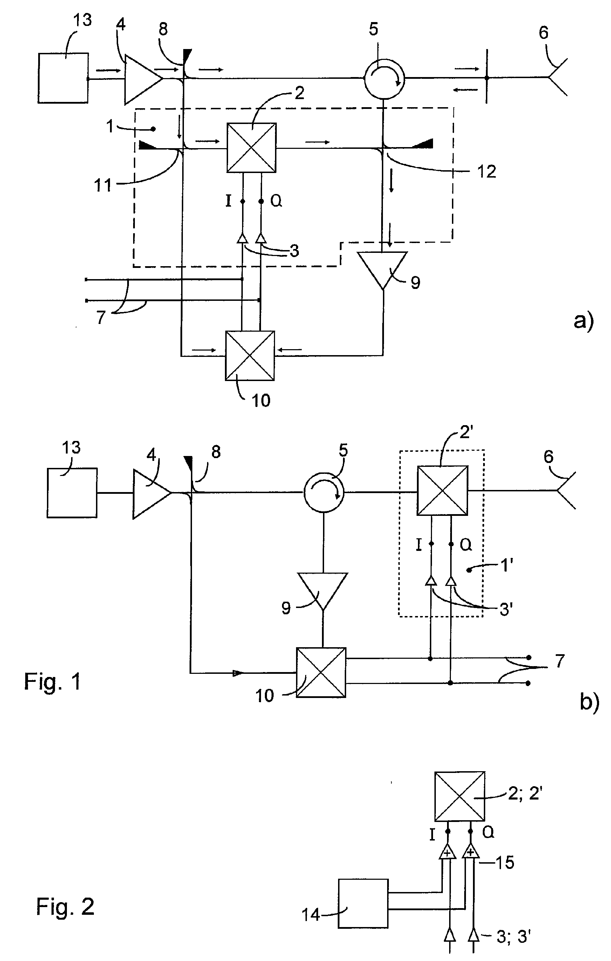

Eine solche an sich bekannte Dauerstrich-Radarschaltung ist in Figur 1a) gezeigt.

In Figur 1a) ist die an sich bekannte RPC-Schaltung mit dem Bezugszeichen 1 bezeichnet. Die RPC-Schaltung 1 umfaßt einen I/Q-Modulator (Vektor-Modulator) 2 und jeweilige Regelverstärker 3 für die im Zwischenfrequenzbereich befindlichen I- und Q-Signale (Inphase-Komponente und Quadratur-Komponente). In Figur 1a) sind zwei Regelverstärker für die I- und Q-Signale gezeigt; es ist jedoch denkbar, daß die Anzahl der Regelverstärker in Übereinstimmung mit den jeweiligen Erfordernissen größer oder geringer gewählt wird.

Eine Radar-Senderschaltung umfaßt einen Dauerstrich-Radarsender 13 und eine Endstufe 4. Die Endstufe 4 überträgt das Sendesignal der frequenzmodulierten Sendeschaltung 13, 4 über einen Zirkulator (oder eine Richtungsgabel) 5 zu einer Sende/Empfangsantenne 6. Ein Teil des Sendesignals wird, wie aus Figur 1a) ersichtlich ist, durch einen ersten Richtungskoppler 8 ausgekoppelt und der RPC-Schaltung 1 zugeführt.

Die von der Sende/Empfangsantenne 6 wieder als Radar-Echo empfangenen Echosignale werden von der Antenne 6 über den Zirkulator 5 einer Empfängerschaltung zugeführt, die aus einem rauscharmen HF-Empfängerverstärker 9 und einem Empfängermischer 10 besteht. Dem Empfängermischer 10 wird weiterhin ein Teil des durch einen zweiten Richtungskoppler 11, welcher dem ersten Richtungskoppler 8 nachgeschaltet ist, ausgekoppelten Sendesignals zugeführt, und dieser erzeugt in einer an sich bekannten Weise Zwischenfrequenzsignale 7, die zur weiteren Verarbeitung der Radar-Echosignale verwendet werden. Die Zwischenfrequenzsignale 7 werden weiterhin über die Regelverstärker 3 zur Steuerung des I/Q-Modulators 2 in der RPC-Schaltung 1 genutzt.

Der Zirkulator 5 ist dazu vorgesehen, die Sendesignale von den empfangenen Echosignalen zu trennen. Ein Teil der Leistung des Sendesignals wird jedoch ohne vorherige Abstrahlung durch die Sende/Empfangsantenne 6 über den Zirkulator 5 in die Empfängerschaltung 9, 10 abgeleitet, und ein weiterer Teil der Leistung des Sendesignals wird nach Reflexion an der Sende/Empfangsantenne 6, jedoch ohne Abstrahlung, von dieser in die Radarschaltung reflektiert und über den Zirkulator 5 ebenfalls in die Empfängerschaltung 9, 10 abgeleitet. Diese beiden direkt in die Empfängerschaltung 9, 10 abgeleiteten Teile des Sendesignals verfälschen die von der Antenne 6 herrührenden Echosignale, was zu einer allgemeinen Verschlechterung der Empfindlichkeit führt.

Zur Vermeidung dieses Phänomens ist in der RPC-Schaltung 1 die Regelschleife so ausgelegt, daß die von der Senderschaltung 13, 4 direkt oder nach Reflexion an der Sende/Empfangsantenne 6 über den Zirkulator 5 zu der Empfängerschaltung 9, 10 abgeleitete Leistung des Sendesignals durch Überlagerung mit einem ebenso großen und gegenphasigen, durch den I/Q-Modulator 2 erzeugten Signal kompensiert wird. Dieses Korrektursignal wird mittels eines dritten Richtungskopplers 12 in den Signalpfad zwischen den Zirkulator 5 und der Empfängerschaltung 9, 10 eingekoppelt.

Bei der in Figur 1b) dargestellten Radarschaltung ist wiederum eine Senderschaltung gezeigt, die einen frequenzmodulierten Dauerstrich-Radarsender 13 und eine diesem nachgeschaltete Endstufe 4 aufweist. Die Endstufe 4 überträgt über einen Zirkulator (oder eine Richtungsgabel) 5 das Sendesignal zu einer Sende/Empfangsantenne 6. In den Signalpfad zwischen dem Zirkulator 5 und der Sende/Empfangsantenne 6 ist ein I/Q-Modulator 2' einer insgesamt mit dem Bezugszeichen 1' bezeichneten RPC-Schaltung eingefügt. Dieser I/Q-Modulator 2' stellt einen Reflexionsmodulator dar.

Die nach der Abstrahlung von der Sende/Empfangsantenne 6 empfangenen Echosignale werden über den Reflexions-I/Q-Modulator 2' und über den Zirkulator 5 einer Empfängerschaltung zugeführt, die einen rauscharmen HF-Empfängerverstärker 9 und einen diesem nachgeschalteten Empfängermischer 10 umfaßt.

Wie auch bei der in Figur 1a) dargestellten Schaltung ist bei der Schaltung der Figur 1b) der Zirkulator 5 dazu vorgesehen, die Sendesignale von den empfangenen Echosignalen zu trennen. Jedoch auch hier wird unvermeidlich ein Teil der Leistung des Sendesignals ohne vorherige Abstrahlung über den Zirkulator 5 direkt oder nach Reflexion an der Sende/Empfangsantenne 6 und dann wiederum über den Zirkulator 5 in den Eingang des Empfängerverstärker 9 abgeleitet. Diese abgeleiteten Signale verfälschen die von der Antenne 6 herrührenden Echosignale, was die Empfindlichkeit verschlechtert.

Zur Vermeidung des Phänomens ist die Regelung in der RPC-Schaltung 1' so ausgelegt, daß die von der Antenne 6 reflektierte Leistung des Sendesignals bzw. die durch den Zirkulator 5 abgeleitete Leistung des Sendesignals durch Überlagerung mit einem ebenso großen und gegenphasigen Signal, welches durch den Reflexions-I/Q-Modulator 2' erzeugt wird, kompensiert wird. Dieses Korrektursignal wird mittels des Reflexions-I/Q-Modulators 2' direkt in den Signalpfad zwischen der Sende/Empfangsantenne 6 und den Zirkulator 5 eingekoppelt und über den letzteren der Empfängerschaltung 9, 10 zugeführt. Der Empfängermischer 10 gibt wiederum in bekannter Weise Zwischenfrequenzsignale 7 ab, die zur weiteren Verarbeitung der Radar-Echosignale dienen und die den Regelverstäkern 3' der RPC-Schaltung 1' als I- und Q-Signale zugeführt werden.

Zum Zwecke der Funktionsprüfung der in Figur 1a) bzw. in Figur 1b) dargestellten Dauerstrich-Radarschaltungen wird dem Modulator 2 bzw. 2' der RPC-Schaltung 1 bzw. 1' von außen ein Steuersignal zugeführt, auf welches ansprechend der Modulator 2 bzw. 2' ein Testsignal erzeugt, welches einem zur Funktionsprüfung geeigneten Radar-Echosignal gleicht. Hierzu ist, wie in Figur 2 ausschnittsweise dargestellt ist, ein Funktionsgenerator 14 vorgesehen, der über Addierstufen 15 mit den jeweiligen I- bzw. Q-Eingängen des Modulators 2 bzw. 2' gekoppelt ist. Einem weiteren Eingang der Addierstufen 15 wird das Signal der Regelverstärker 3 bzw. 3' der RPC-Schaltung 1 bzw. 1' zugeführt.

Allgemein gesprochen wird der Modulator 2 bzw. 2' der RPC-Schaltung 1 bzw. 1' dazu benutzt, der Empfängerschaltung 9, 10 ein Hochfrequenzsignal zuzuführen, das in Ansprache auf das von dem Funktionsgenerator 14 von außen zugeführte Steuersignal das besagte einem zur Funktionsprüfung geeigneten Radar-Echosignal gleichende Testsignal zu erzeugen. Dies geschieht in entsprechender Weise, wie der Modulator 2 bzw. 2' in der geschlossenen Regelschleife der RPC-Schaltung 1 bzw. 1' das Korrektursignal zum Kompensieren der direkt abgeleiteten Teile des Sendesignals erzeugt. Dazu werden an den Eingängen I und Q des Modulators 2 bzw. 2' Inphase- und Quadratur-Komponenten des im Basisbandbereich liegenden Steuersignals angelegt, so daß im Hochfrequenzzweig das entsprechend auf die Frequenzlage des Sendesignals umgesetzte Hochfrequenz-Testsignal erscheint. Auf diese Weise kann eine Funktionsprüfung der gesamten Radarschaltung einschließlich des Hochfrequenzteils, lediglich ohne die Sende/Empfangsantenne 6 erfolgen, ohne daß Eingriffe in die Hochfrequenzkomponenten der Radarschaltung selbst nötig wären.

Das verwendete Basisband-Testsignal kann verschiedene Formen annehmen, je nach Modulation des Dauerstrichradars. Beispielsweise simuliert ein sinusförmiges Signal an einem der beiden Eingänge in einem Dauerstrich-Doppler-Radar ein einzelnes Zielobjekt mit einer festen Geschwindigkeit (die Dopplerfrequenz entspricht der Frequenz der Sinus-Schwingung des Basisband- Testsignals).

In modulierten Dauerstrich-Radaren können komplexere Testsignale nötig sein, um ein einzelnes Zielobjekt zu simulieren. Durch Überlagerung von verschiedenen Einzelobjekt-Signalen können ohne weiteres auch komplexe Ziel-Szenarien erzeugt werden, bis hin zu einem kontinuierlichen Signalspektrum in abbildenden Radarschaltungen.

Die Testsignale können in dem Funktionsgenerator 14 in an sich im Stande der Technik bekannter Weise erzeugt werden, beispielsweise unter Verwendung eines programmierbaren Signalprozessors oder mit Hilfe eines fest abgelegten Datensatzes in einem Speicher mit anschließender Digital/Analog-Wandlung zur Erzeugung des analogen Spannungsverlaufs.

Das so erzeugte Basisband-Testsignal wird in den Addierschaltungen 3 bzw. 3', vergleiche Figur 2, dem Steuersignal der RPC-Schaltung 1 bzw. 1' überlagert, so daß die vollständige Funktion der Radarschaltung auch bei Einspeisung des Testsignals erhalten bleibt.

### Bezugszeichenliste

- 1; 1': RPC-Schaltung
- 2; 2': Modulator
- 3; 3': Regelverstärker
- 4: Endstufe
- 5: Zirkulator
- 6: Sende/Empfangsantenne
- 7: ZF-Signale
- 8: erster Richtkoppler
- 9: Empfängerverstärker
- 10: Empfängermischer
- 11: zweiter Richtkoppler
- 12: dritter Richtkoppler
- 13: Sender
- 14: Funktionsgenerator
- 15: Addierstufe

## Patentansprüche

1. Einrichtung zur Funktionsprüfung in einem Dauerstrichradar, mit einer Senderschaltung (13,4) zur Erzeugung von Radar-Sendesignalen, einer über einen Zirkulator (5) mit der Senderschaltung (13,4) gekoppelten Sende/Empfangsantenne (6) und einer über den Zirkulator (5) mit ihrem Eingang mit der Sende/ Empfangsantenne (6) gekoppelten Empfängerschaltung (9, 10) zur Verarbeitung von an der Sende/Empfangsantenne (6) empfangenen Radar-Echosignalen eines Zielobjekts, wobei der Zirkulator (5) zur Weiterleitung der von der Senderschaltung (13,4) erzeugten Sendesignale an die Sende/Empfangsantenne (6) und zur Ableitung der von der Sende/Empfangsantenne (6) empfangenen Echosignale des Zielobjekts an den Eingang der Empfängerschaltung (9, 10) dient, und mit einer zwischen Ausgang und Eingang der Empfängerschaltung (9, 10) gekoppelten RPC-Schaltung (1; 1') zur Unterdrückung von aus der Senderschaltung (13,4) und/oder durch Reflexion von der Sende/Empfangsantenne (6) direkt in die Empfängerschaltung (9, 10) abgeleiteten Teilen der Sendesignale, die einen in den Signalweg des Steuersignals geschalteten Modulator (2; 2') zur Erzeugung eines die direkt abgeleiteten Teile der Sendesignale kompensierenden Korrektursignals enthält, **dadurch gekennzeichnet, daß** der Modulator (2; 2') zur Erzeugung eines einem zur Funktionsprüfung geeigneten Radar-Echosignal gleichenden Testsignals in Ansprache auf ein von außen zugeführtes Steuersignal vorgesehen ist.

2. Einrichtung nach Anspruch 1, **dadurch gekennzeichnet, daß** ein mit dem Modulator (2; 2') der RPC-Schaltung (1; 1') gekoppelter Funktionsgenerator (14) zur Erzeugung des dem Modulator (2; 2') von außen zugeführten Steuersignals vorgesehen ist.

3. Einrichtung nach Anspruch 2, **dadurch gekennzeichnet, daß** der Modulator (2; 2') Steuereingänge (I, Q) zur Aufnahme von Inphase- und Quadratur-Komponenten eines Basisbandsignals der Empfängerschaltung (9, 10) aufweist, und daß der Funktionsgenerator (14) zur Erzeugung von Inphase- und Quadratur- Komponenten eines Basisband-Testsignals als Steuersignal an den Eingängen (I, Q) des Modulators (2; 2') vorgesehen ist.

4. Einrichtung nach Anspruch 2 oder 3, **dadurch gekennzeichnet, daß** am Eingang des Modulators (2; 2') eine Addiererschaltung (15) zur Kombination des von dem Funktionsgenerator (14; 14') erzeugten Steuersignals mit einem zum Zwecke der Unterdrückung der direkt in die Empfängerschaltung (9, 10) abgeleiteten Sendesignale von der Empfängerschaltung (9, 10) zu dem Modulator (2; 2') zurückgeführten Rückkopplungssignal enthält.

5. Einrichtung nach Anspruch 3 oder 4, **dadurch gekennzeichnet, daß** die Addiererschaltung (15) jeweils einen mit den Eingängen (I, Q) des Modulators (2; 2') gekoppelten Addierer (15) zur Kombination der Inphase- und Quadratur-Komponenten des von dem Funktionsgenerator (14; 14') als Steuersignal für den Modulator (2; 2') erzeugten Basisband-Testsignals mit den Inphase- und Quadratursignalen des Basisband-Signals der Empfängerschaltung (9, 10) enthält.

6. Einrichtung nach einem der Ansprüche 1 bis 5, **dadurch gekennzeichnet, daß** der Modulator (2) der RPC-Schaltung (1) zur Kopplung des die direkt abgeleiteten Teile des Sendesignals kompensierenden Korrektursignals und/oder des in Ansprache auf das von außen zugeführte Steuersingal erzeugten Testsignals in den Signalweg zwischen dem Zirkulator (5) und dem Eingang der Empfängerschaltung (9, 10) vorgesehen ist.

7. Einrichtung nach einem der Ansprüche 1 bis 5, **dadurch gekennzeichnet, daß** der Modulator (2') der RPC-Schaltung (1') zur Kopplung des die direkt abgeleiteten Teile des Sendesignals kompensierenden Korrektursignals und/oder des in Ansprache auf den von außen zugeführte Steuersignal erzeugten Testsignals in den Signalweg zwischen den Zirkulator (5) und der Sende/ Empfangsantenne (6) vorgesehen und über den Zirkulator (5) mit dem Eingang der Empfängerschaltung (9, 10) gekoppelt ist.

8. Einrichtung nach einem der Ansprüche 2 bis 7, **dadurch gekennzeichnet, daß** der Funktionsgenerator (14) einen programmierbaren Signalprozessor und einen an diesen angeschlossenen Digital/Analog-Wandler zur Erzeugung des dem Modulator (2; 2') von außen zugeführten Steuersignals enthält.

9. Einrichtung nach einem der Ansprüche 2 bis 8, **dadurch gekennzeichnet, daß** der Funktionsgenerator (14) einen Speicher mit einem fest abgelegten Datensatz und einen an diesen angeschlossenen Digital/Analog-Wandler zur Erzeugung des dem Modulator (2; 2') von außen zugeführten Steuersignals enthält.

10. Einrichtung nach einem der Ansprüche 2 bis 9, **dadurch gekennzeichnet, daß** der Funktionsgenerator (14) zur Erzeugung eines sinusförmigen Steuersignals vorgesehen ist.

11. Einrichtung nach einem der Ansprüche 2 bis 10, **dadurch gekennzeichnet, daß** der Funktionsgenerator (14) zur Erzeugung eines oder mehrerer überlagerbarer komplexer Steuersignale vorgesehen ist.
